# EUROPEAN PATENT APPLICATION

(11) **EP 4 580 098 A1**
(43) Date of publication of application: **02.07.2025**
(21) Application number: 22959194.6
(22) Date of filing: 23.09.2022
(51) Int. Cl.: H04L 5/00

(54) **SIDELINK COMMUNICATION METHOD AND TERMINAL DEVICE**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN); ZHANG, Boyuan, Dongguan, Guangdong 523860 (CN)
(74) Representative: RGTH
(86) International application number: PCT/CN2022/120809
(87) International publication number: WO 2024/060187

(57) **Abstract**

Provided in the present application are a sidelink communication method and a terminal device. The method comprises: if a first condition is satisfied, a first terminal device executing a first operation on an unlicensed spectrum; and the first terminal device sending first sidelink data on the basis of the first operation, wherein the first condition is related to one or more of channel access, resource occupation, and channel occupation, and the first operation is related to the selection of a sidelink resource and/or the generation of the first sidelink data. The first condition is related to the unlicensed spectrum, and the first operation may be executed when the first condition is satisfied. That is, on the basis of the first condition, the first operation may be executed by means of taking the effect of the unlicensed spectrum into account. Therefore, by means of setting a first condition, the present application optimizes, on an unlicensed spectrum, the process of the selection of a sidelink resource and/or the process of the generation of sidelink data.

## Description

### TECHNICAL FIELD

This application relates to the field of communications technologies, and more specifically, to a method for sidelink communication and a terminal device.

### BACKGROUND

In a process of performing communication on a sidelink, selection of a sidelink resource and/or generation of a sidelink data packet may be performed. When sidelink communication is performed on an unlicensed spectrum, how to implement selection of a sidelink resource and/or generation of a sidelink data packet in consideration of an impact of the unlicensed spectrum is an urgent problem to be resolved.

### SUMMARY

This application provides a method for sidelink communication and a terminal device. The following describes the aspects related to this application.

According to a first aspect, a method for sidelink communication is provided, including: if a first condition is met, executing, by a first terminal device, a first operation on an unlicensed spectrum; and transmitting, by the first terminal device based on the first operation, first sidelink data, where the first condition is related to one or more of channel access, resource occupation, or channel occupation, and the first operation is related to selection of a sidelink resource and/or generation of the first sidelink data.

According to a second aspect, a method for sidelink communication is provided, including: receiving, by a second terminal device, first sidelink data transmitted by a first terminal device, where the first sidelink data is transmitted based on a first operation executed by the first terminal device, the first operation is executed by the first terminal device on an unlicensed spectrum in a case in which a first condition is met, the first condition is related to one or more of channel access, resource occupation, or channel occupation, and the first operation is related to selection of a sidelink resource and/or generation of the first sidelink data.

According to a third aspect, a terminal device is provided, including: an executing unit, configured to: if a first condition is met, execute a first operation on an unlicensed spectrum; and a transmitting unit, configured to transmit first sidelink data based on the first operation, where the first condition is related to one or more of channel access, resource occupation, or channel occupation, and the first operation is related to selection of a sidelink resource and/or generation of the first sidelink data.

According to a fourth aspect, a terminal device is provided, where the terminal device is a second terminal device, and the terminal device includes: a receiving unit, configured to receive first sidelink data transmitted by a first terminal device, where the first sidelink data is transmitted based on a first operation executed by the first terminal device, the first operation is executed by the first terminal device on an unlicensed spectrum in a case in which a first condition is met, the first condition is related to one or more of channel access, resource occupation, or channel occupation, and the first operation is related to selection of a sidelink resource and/or generation of the first sidelink data.

According to a fifth aspect, a terminal device is provided, including a processor, a memory, and a transceiver, where the memory is configured to store one or more computer programs, and the processor is configured to invoke the computer program in the memory, to cause the terminal device to execute some or all of steps in a method according to the first aspect or the second aspect.

According to a sixth aspect, an embodiment of this application provides a communications system, where the system includes the foregoing terminal device. In another possible design, the system may further include another device that interacts with the terminal device in the solutions provided in embodiments of this application.

According to a seventh aspect, an embodiment of this application provides a computer-readable storage medium, where the computer-readable storage medium stores a computer program, and the computer program causes a terminal to execute some or all of steps in a method according to the foregoing aspects.

According to an eighth aspect, an embodiment of this application provides a computer program product, where the computer program product includes a non-transitory computer-readable storage medium that stores a computer program, and the computer program is operable to cause a terminal to execute some or all of steps in a method according to the foregoing aspects. In some implementations, the computer program product may be a software installation package.

According to a ninth aspect, an embodiment of this application provides a chip, where the chip includes a memory and a processor, and the processor may invoke a computer program from the memory and run the computer program, to implement some or all of steps described in a method according to the foregoing aspects.

A first condition is related to an unlicensed spectrum, and a first operation may be executed in a case in which the first condition is met. That is, based on the first condition, an impact of the unlicensed spectrum may be considered for execution of the first operation. Therefore, in this application, through setting of the first condition, at least one of a process of selecting a sidelink resource or a process of generating sidelink data is optimized on the unlicensed spectrum.

### BRIEF DESCRIPTION OF DRAWINGS

FIG. 1 is an example diagram of a wireless communications system to which embodiments of this application are applied.
FIG. 2 is an example diagram of an application scenario of sidelink communication in a first mode.
FIG. 3 is an example diagram of an application scenario of sidelink communication in a second mode.
FIG. 4 is a schematic flowchart of a method for sidelink communication according to an embodiment of this application.
FIG. 5 is a schematic structural diagram of a terminal device according to an embodiment of this application.
FIG. 6 is a schematic structural diagram of another terminal device according to an embodiment of this application.
FIG. 7 is a schematic structural diagram of a communications device according to an embodiment of this application.

### DESCRIPTION OF EMBODIMENTS

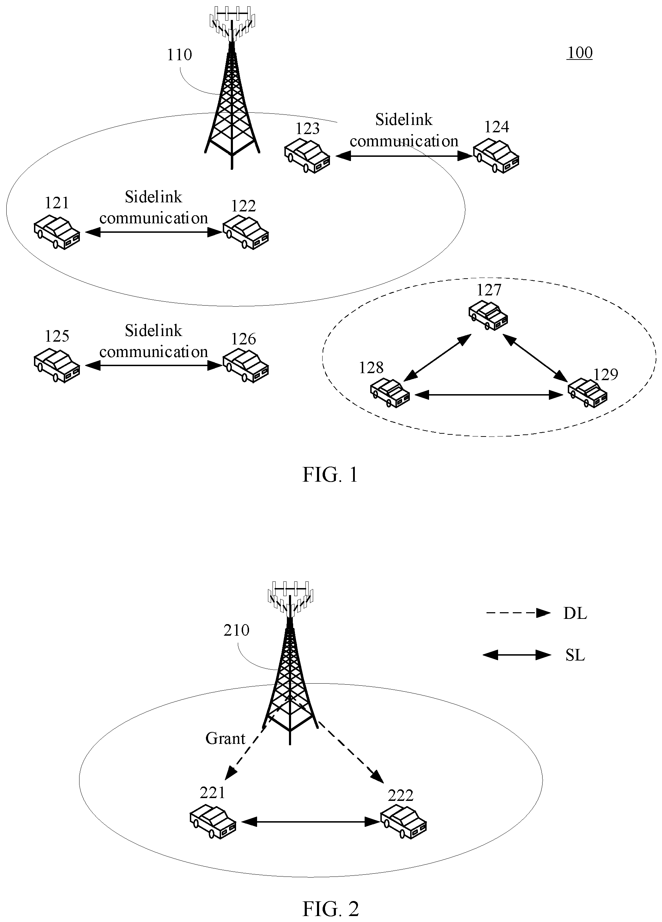

The following describes the technical solutions in this application with reference to the accompanying drawings. For ease of understanding, the following first describes the terms and communication processes involved in this application with reference to FIG. 1 to FIG. 3.

### Communications system

FIG. 1 is an example diagram of a wireless communications system 100 to which embodiments of this application are applicable. The wireless communications system 100 may include one or more communications devices. For example, the one or more communications devices may include a network device 110 and terminals 121 to 129. The network device 110 may provide communication coverage for a specific geographic area, and may communicate with a terminal located in the coverage area.

In some implementations, terminal devices may communicate with each other on a sidelink (sidelink, SL). Sidelink communication may also be referred to as proximity services (proximity services, ProSe) communication, unilateral communication, side link communication, device-to-device (device to device, D2D) communication, direct link communication, or the like. A vehicle-to-everything (vehicle to everything, V2X) system may also be implemented in a manner of direct communication between terminals (that is, sidelink communication).

In some implementations, sidelink data may be transmitted between terminal devices on a sidelink. The sidelink data may include data and/or control signalling. In some implementations, the sidelink data may be, for example, a physical sidelink control channel (physical sidelink control channel, PSCCH), a physical sidelink shared channel (physical sidelink shared channel, PSSCH), a PSCCH demodulation reference signal (demodulation reference signal, DMRS), a PSSCH DMRS, a PSFCH, or a sidelink synchronization signal block (sidelink synchronization signal block, S-SSB). The S-SSB includes a sidelink primary synchronization signal (sidelink primary synchronization signal, S-PSS), a sidelink secondary synchronization signal (sidelink secondary synchronization signal, S-SSS), and a physical sidelink broadcast channel (physical sidelink broadcast channel, PSBCH).

Different from a manner in which communication data is received or transmitted by a network device in a conventional cellular system, a manner of direct communication between terminal devices is used in a sidelink communications system (for example, a vehicle-to-everything system). As a result, sidelink communication has higher spectral efficiency and a lower transmission delay.

With reference to FIG. 1, the following describes several common sidelink communication scenarios. Sidelink communication may be classified into three scenarios depending on whether terminals on a sidelink are located in coverage of a network device. In a scenario 1, the terminals perform sidelink communication within the coverage of the network device. In a scenario 2, the terminals perform sidelink communication partially within the coverage of the network device. In a scenario 3, the terminals perform sidelink communication outside the coverage of the network device.

As shown in FIG. 1, in the scenario 1, terminals 121 and 122 may communicate with each other on a sidelink, and the terminals 121 and 122 are both within the coverage of the network device 110. In other words, the terminals 121 and 122 are both within the coverage of the same network device 110. In this scenario, the network device 110 may transmit configuration signalling to the terminals 121 and 122, and accordingly, the terminals 121 and 122 communicate with each other on the sidelink based on the configuration signalling.

As shown in FIG. 1, in the scenario 2, terminals 123 and 124 may communicate with each other on a sidelink, the terminal 123 is within the coverage of the network device 110, and the terminal 124 is outside the coverage of the network device 110. In this scenario, the terminal 123 receives configuration information from the network device 110, and performs communication on the sidelink based on a configuration of configuration signalling. However, since the terminal 124 is outside the coverage of the network device 110, the terminal 124 cannot receive the configuration information from the network device 110. In this case, the terminal 124 may obtain a configuration of sidelink communication based on pre-configured (pre-configuration) configuration information and/or configuration information transmitted by the terminal 123 within the coverage, to communicate with the terminal 123 on the sidelink based on the obtained configuration.

In some cases, the terminal 123 may transmit the configuration information to the terminal 124 through a sidelink broadcast channel (physical sidelink broadcast channel, PSBCH), to configure the terminal 124 to perform communication on the sidelink.

As shown in FIG. 1, in the scenario 3, terminals 125 to 129 are all outside the coverage of the network device 110 and cannot communicate with the network device 110. In this case, all the terminals may configure sidelink communication based on pre-configuration information.

In some cases, the terminals 127 to 129 outside the coverage of the network device may form a communication cluster, and the terminals 127 to 129 in the communication cluster may communicate with each other. In addition, the terminal 127 in the communication cluster may serve as a central control node, which is also referred to as a cluster header (cluster header, CH). Correspondingly, the other terminals in the communication cluster may be referred to as "cluster members".

The terminal 127, as the CH, may have one or more of the following functions: being responsible for establishment of the communication cluster; joining and leaving of the cluster members; resource coordination, allocation of sidelink transmission resources to the cluster members, and receiving of sidelink feedback information from the cluster members; resource coordination with another communication cluster; or the like.

It should be noted that FIG. 1 exemplarily shows one network device and a plurality of terminal devices. Optionally, the wireless communications system 100 may include a plurality of network devices, and another quantity of terminal devices may be included in coverage of each network device. This is not limited in embodiments of this application.

Optionally, the wireless communications system 100 may further include another network entity such as a network controller or a mobility management entity, which is not limited in embodiments of this application.

It should be understood that the technical solutions in embodiments of this application may be applied to various communications systems, for example, a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may be further applied to a future communications system, such as a sixth generation mobile communications system or a satellite communications system.

A terminal in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal device, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to serve as a base station. For example, the terminal device may function as a scheduling entity that provides sidelink data between terminal devices in V2X, D2D, or the like. For example, a cellular phone and a vehicle communicate with each other by using sidelink data. A cellular phone and a smart home device communicate with each other, without relaying a communication signal by using a base station.

A network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a wireless node, an access point (access point, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that assumes the function of a base station in D2D, V2X, or machine-to-machine (machine-to-machine, M2M) communications, a network-side device in a 6G network, a device that assumes the function of a base station in a future communications system, or the like. The base station may support networks with a same access technology or different access technologies. A specific technology and a specific device form used by the network device are not limited in embodiments of this application.

The base station may be fixed or mobile. For example, a helicopter or an unmanned aerial vehicle may be configured to serve as a mobile base station, and one or more cells may move according to a location of the mobile base station. In another example, a helicopter or an unmanned aerial vehicle may be configured to serve as a device in communication with another base station.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

### Mode of sidelink communication

In some standards or protocols (for example, 3rd generation partnership project (3rd generation partnership project, 3GPP)), two modes (or referred to as transmission modes) of sidelink communication, that is, a first mode (mode-1) and a second mode (mode-2), are defined.

In the first mode, a resource (the resource mentioned in this application may also be referred to as a transmission resource, such as a time frequency resource) of a terminal device is allocated by a network device. The terminal device may transmit data on a sidelink by using the resource allocated by the network device. The network device may allocate a resource for a single time of transmission to the terminal device, or may allocate a resource for semi-static transmission to the terminal device. The first mode may be applied to a scenario in which there is coverage of the network device, for example, the scenario shown in FIG. 2. In the scenario shown in FIG. 2, a terminal device 221 and a terminal device 222 are located within network coverage of a network device 210. The network device 210 may allocate a resource used in a sidelink transmission process to the terminal device 221 and the terminal device 222. As shown in FIG. 2, the network device may grant (grant) by using a downlink (downlink, DL), and allocate a resource used in a sidelink transmission process to the terminal device 221 and the terminal device 222, so that the terminal device 221 and the terminal device 222 may communicate on a sidelink (sidelink, SL). In some embodiments, the first mode may also be referred to as a mode A.

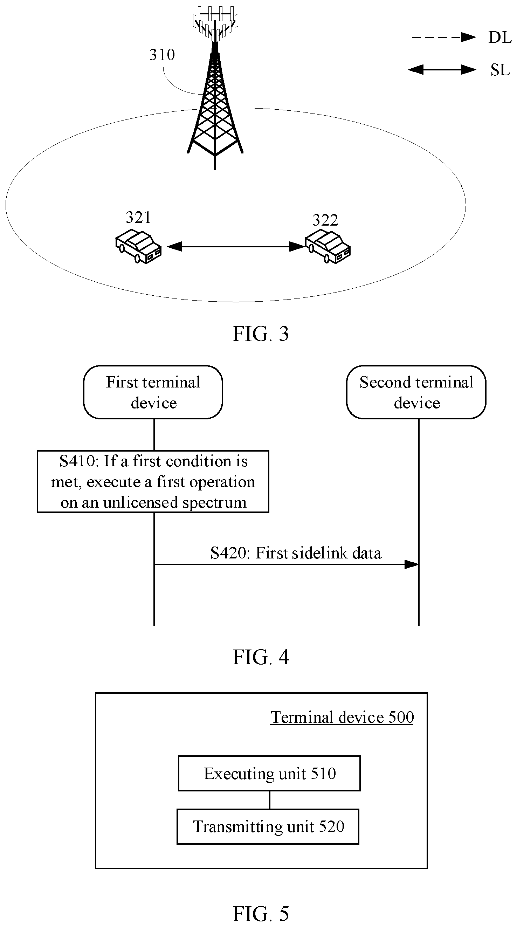

In the second mode, the terminal device may independently select one or more resources from a resource pool (resource pool, RP). Then, the terminal device may perform sidelink transmission by using the selected resource. For example, in the scenario shown in FIG. 3, a terminal device 321 is located in network coverage. The terminal device 321 may independently select a resource from a pre-configured resource pool for sidelink transmission. Alternatively, the terminal device 321 may independently select one or more resources from the resource pool configured by a network device 310 for sidelink transmission. It should be noted that if the terminal device 321 is located outside the network coverage, the terminal device 321 may also use the second mode to perform resource selection. In some embodiments, the second mode may also be referred to as a mode B.

### Research progress of sidelink communication in 3GPP

In 3GPP, sidelink communication is studied at different stages.

In the 3GPP release (release, Rel) 12 or 13, device-to-device communication is for a scenario of a proximity-based service (proximity-based services, ProSe), which is mainly for a public security service. In ProSe, a position of a resource pool in time domain may be configured, for example, the resource pool is discontinuous in time domain. Based on the foregoing manner, a terminal device may discontinuously transmit or receive data on a sidelink, thereby achieving a power saving effect.

In Rel-14 or Rel-15, a scenario of communication between vehicles is studied for a V2X system. V2X is mainly for services of communication between vehicles or between a vehicle and a person that move at a relatively high speed. In V2X, because a vehicle-mounted system has continuous power supply, power efficiency is not a major problem to be resolved, and a data transmission delay is a major problem. Therefore, a terminal device may be required to perform continuous transmitting and receiving in a system design.

In Rel-14, a further enhancements to LTE DTD (further enhancements to LTE device to device, FeD2D) technology studies a scenario in which a wearable device accesses a network by using a terminal device, and is mainly for a scenario with a low moving speed and low power access. In FeD2D, a 3GPP conclusion in a pre-research stage is that a network device may configure a discontinuous reception (discontinuous reception, DRX) parameter of a remote (remote) terminal by using a relay (relay) terminal. However, this task is not further standardized. Therefore, details on how to configure DRX are not conclusive.

In research related to NR V2X, based on a broadcast scenario of LTE V2X, NR V2X further extends to unicast and multicast scenarios. Similar to LTE V2X, NR V2X also defines the foregoing two resource authorization modes, that is, the first mode and the second mode. In addition, in NR V2X, a terminal device may be in a hybrid mode. In the hybrid mode, the terminal device may not only obtain a resource by using the first mode, but also obtain a resource by using the second mode. The foregoing resource obtaining may be indicated by using a sidelink grant, that is, the sidelink grant may indicate time-frequency positions of corresponding PSCCH and PSSCH resources.

In LTE V2X, hybrid automatic repeat request (hybrid automatic repeat request, HARQ) retransmission may be initiated by a terminal device, and a HARQ is based on no feedback. Unlike that in LTE V2X, feedback-based HARQ retransmission is introduced in NR V2X. The feedback-based HARQ retransmission may be applied to unicast communication, or may be applied to multicast communication.

### Unlicensed spectrum communication

An unlicensed spectrum (unlicensed spectrum) is a spectrum that is classified by a country or region as being used for communication by a radio device. The spectrum is generally considered as a shared spectrum. That is, as long as a regulatory requirement set by a country or region on the spectrum is met, a communications device is allowed to use the spectrum without applying for a dedicated spectrum grant from a national or regional dedicated authority of spectrum management. The unlicensed spectrum may also be referred to as a shared spectrum, a license-free spectrum, an unlicensed frequency band, or a license-free frequency band.

For a communication process based on a Uu interface, a network device (for example, a gNB) may operate in a dynamic or semi-static channel access mode. In the foregoing two channel access modes, the network device and a terminal device may use listen before talk (listen before talk, LBT) before executing transmission on a cell configured with unlicensed spectrum channel access. When LBT is applied, a data transmit end (transmitter) monitors or senses a channel to determine whether the channel is idle or busy. When it is sensed that the channel is idle, the data transmit end may execute data transmission.

After LBT on the channel of the unlicensed spectrum succeeds, duration of signal transmission performed by the communications device by using the channel of the unlicensed spectrum may be represented by a channel occupancy time (channel occupancy time, COT). To ensure fairness, in one time of transmission, duration in which the communications device performs signal transmission by using the channel of the unlicensed spectrum cannot exceed a maximum channel occupancy time (maximum channel occupancy time, MCOT).

Types of a channel access procedure may include a channel access procedure type 1 (type1) and a channel access procedure type 2 (type2). The channel access procedure type 1 is multi-slot channel sensing with random backoff based on contention window size adjustment, where a corresponding channel access priority class (channel access priority class, CAPC) may be selected based on a priority of a service to be transmitted. The channel access procedure type 2 is a channel access manner based on a monitoring slot of a fixed length. In embodiments of this application, a channel access manner is also referred to as an LBT manner, and a channel access procedure is also referred to as an LBT procedure.

The channel access procedure type 1 is mainly used for a communications device to initiate channel occupation. The channel access procedure type 2 is mainly used for sharing channel occupation by communications devices.

The channel access procedure type 2 includes a channel access procedure type 2A (type2A), a channel access procedure type 2B (type2B), and a channel access procedure type 2C (type2C). The following describes the type 2A, the type 2B, and the type 2C.

In a case in which the communications device performs channel access of the type 2A, a channel sensing manner of the communications device is channel sensing of 25 µs (µs). Specifically, in a case of performing channel access of the channel access procedure type 2A, the communications device may perform channel monitoring for 25 µs before transmission starts, and perform transmission after the channel monitoring succeeds (that is, a channel is idle).

In a case in which the communications device performs channel access of the type 2B, a channel sensing manner of the communications device is channel sensing of 16 µs. Specifically, in a case of performing channel access of the channel access procedure type 2B, the communications device may perform channel monitoring for 16 µs before transmission starts, and perform transmission after the channel monitoring succeeds (that is, a channel is idle). A size of a gap between a start position of the transmission and an end position of previous transmission is 16 µs, or the size of the gap between the start position of the transmission and the end position of the previous transmission is greater than or equal to 16 µs and less than 25 µs.

In a case in which the communications device performs channel access of the type 2C, the communications device may perform transmission without performing channel sensing after the gap ends. Specifically, in a case of performing channel access of the channel access procedure type 2C, the communications device may directly perform transmission, where the size of the gap between the start position of the transmission and the end position of the previous transmission is less than or equal to 16 µs. A length of the transmission does not exceed 584 µs.

When the terminal device detects a consistent uplink LBT fault, the terminal device may perform measures specified in the standard TS 38.321[6]. The detection is based on each bandwidth part (bandwidth part, BWP) and based on all uplink transmission within the respective BWP. When detecting a consistent uplink LBT fault on a secondary cell (secondary cell, SCell), the terminal device may report this to a corresponding network device (for example, a gNB) by using a medium access control control element (medium access control control element, MAC-CE) in a serving cell that is different from the SCell on which the fault is detected (a master node (master node, MN) is used for a master cell group (master cell group, MCG) and a secondary node (secondary node, SN) is used for a secondary cell group (secondary cell group, SCG)). If no resource is available for transmitting the MAC-CE, the terminal device may transmit a scheduling request (scheduling request, SR). When detecting a consistent uplink LBT fault in a special cell (special cell, SpCell), the terminal device may switch to another uplink (uplink, UL) BWP on which a random access channel (random access channel, RACH) resource is configured in the cell, initiate a RACH, and report a fault by using the MAC-CE. When a plurality of UL BWPs may be switched to, the terminal device may select one of them. For a primary secondary cell (primary secondary cell, PSCell), if a consistent uplink LBT fault is detected on all UL BWPs configured with RACH resources, the terminal device may declare an SCG radio link failure (radio link failure, RLF) and report a fault to a mobile network (mobile network, MN) by using SCGFailureInformation. For a primary cell (primary cell, PCell), if an uplink LBT fault is detected on all UL BWPs configured with RACH resources, the terminal device may declare an RLF.

### COT sharing mechanism

After a communications device initiates a COT, in addition to using a resource within the COT for transmission, the communications device may also share the resource within the COT with another communications device for transmission. For example, a first communications device may initiate sharing of a COT, and share the obtained COT with a second communications device. The second communications device may inherit the COT and perform data transmission by using the COT. The second communications device may be referred to as a COT sharing communications device (for example, may include a COT sharing terminal device).

A principle of the COT sharing may include: a CAPC level corresponding to a service to be transmitted by the second communications device should not be lower than a CAPC level used when the first communications device obtains the COT.

In a case in which the first communications device shares a resource within the COT with the second communications device, the second communications device may perform channel access by using a channel access procedure type 2.

Some communications systems (for example, a sidelink over unlicensed spectrum (sidelink over unlicensed spectrum, SL-U) system) support a direct COT sharing mechanism of a terminal device. That is, when a terminal device successfully performs channel access of type 1 and performs sidelink transmission by using a channel, the terminal device may share the channel with another terminal device for sidelink transmission. That is, COT sharing may be supported between terminal devices that establish a PC5 RRC connection. For example, a terminal device 1 successfully performs channel access of type 1, and transmits a PSCCH or PSSCH to a terminal device 2. The terminal device 1 may share a COT with the terminal device 2, so that the terminal device 2 transmits a PSFCH to the terminal device 1. In this case, the terminal device 2 only needs to perform a type 2 channel access procedure within the shared COT.

The following describes a COT sharing mechanism by using an SL-U system as an example. It may be understood that the COT sharing mechanism described below may also be applicable to another communications system.

To ensure that a communications device in the SL-U system can continuously use a channel within an obtained COT, a guard interval (guard period, GP) symbol of 16 µs may be supported in an SL-U frame structure. In some implementations, a GP length may be reduced by reusing cyclic prefix extension (cyclic prefix extension, CP extension).

A terminal device may complete COT sharing by indicating COT sharing information. The COT sharing terminal device may implement COT sharing by inheriting or forwarding the COT sharing information. The COT information may be carried in sidelink control information (sidelink control information, SCI) of physical layer control signalling. If the COT sharing information is carried in the SCI, a processing time may be considered for implementation of COT sharing. The processing time may be a time at which the terminal device receives and decodes the COT sharing information carried in the SCI. Further, a relationship between the processing time and a minimum monitoring time specified in a regulation may be considered.

The COT sharing information indicated by the terminal device that initiates the COT may include one or more of the following information: remaining COT duration information, available sub-band information (this information may be obtained by using resource indication information carried in the SCI), CAPC information, or COT sharing identifier (identity, ID) information.

The COT sharing information inherited by the COT sharing terminal device may include: remaining COT duration information, available sub-band information (this information may be obtained by using resource indication information carried in the SCI), CAPC information, COT sharing ID information, or the like.

The COT sharing ID information may include at least one or more of the following: a target terminal ID, a terminal group ID, service identifier information, or a sidelink zone ID (SL zone ID).

Inheritance and forwarding of the COT sharing information may meet the following processing time condition: a time length between an end position of a symbol that receives the SCI and a start position of a symbol that transmits the SCI is greater than or equal to a first time length (which, for example, may be represented by T_{proc,SL-U}), where T_{proc,SL-U} may be a processing time that needs to be considered for the inheritance and forwarding of the COT sharing information.

When a plurality of pieces of COT sharing information that meets the processing time condition is received by the terminal device, proper COT sharing information may be selected by using a solution 1 and/or a solution 2 for inheritance and forwarding.

Solution 1: The terminal device may select, according to remaining COT lengths in the plurality of pieces of COT sharing information, to inherit and forward COT sharing information with a longest remaining COT length. The COT sharing information that has the longest remaining COT length and is forwarded by the terminal device may be determined relative to a transmitting instant of the terminal device.

Solution 2: When remaining COT lengths determined based on a plurality of pieces of COT sharing information are the same, the terminal device may select, according to CAPC values in the plurality of pieces of COT sharing information, to inherit and forward COT sharing information with a maximum CAPC value.

It should be noted that the plurality of pieces of COT sharing information may be a plurality of pieces of COT sharing information available for the terminal device. In addition to the foregoing solutions, COT information may also be inherited and forwarded based on other information. For example, COT information may be inherited and forwarded based on resource block set (resource block set, RB set) information in COT sharing information.

The terminal device may be allowed to share a COT under a COT sharing condition.

In an implementation, the COT sharing condition may be determined based on COT sharing ID information. For example, a terminal group may be determined based on the COT sharing ID information, and a COT may be shared between terminal devices in the terminal group.

In an implementation, the COT sharing mechanism may be implemented in an implicit public group manner, that is, it is determined, based on an evaluation result of a responding device terminal, whether a COT shared by another terminal is valid. A COT sharing evaluation standard of the responding device terminal may include the following criteria: an expected COT sharing range or area, and channel quality measurement of the responding device terminal. The expected COT sharing range or area may be determined based on an SL zone ID, RSRP measurement, or the like. The channel quality measurement of the responding device terminal may include, for example, measurement related to a reference signal received power (reference signal received power, RSRP) threshold or a constant bit rate (constant bit rate, CBR).

In a process of performing communication on a sidelink, selection of a sidelink resource and/or generation of a sidelink data packet may be performed. When sidelink communication is performed on an unlicensed spectrum, how to implement selection of a sidelink resource and/or generation of a sidelink data packet in consideration of an impact of the unlicensed spectrum is an urgent problem to be resolved.

FIG. 4 is a schematic flowchart of a method for sidelink communication according to an embodiment of this application. The method shown in FIG. 4 may be executed by a first terminal device and a second terminal device. The method shown in FIG. 4 may include steps S410 and S420.

Step S410: If a first condition is met, the first terminal device executes a first operation on an unlicensed spectrum.

Step S420: The first terminal device transmits first sidelink data based on the first operation. Correspondingly, the second terminal device may receive the first sidelink data.

The first condition may be related to one or more of channel access, resource occupation, or channel occupation.

Channel access may include a channel access procedure for the unlicensed spectrum. That is, the first condition may be related to a channel access procedure of the first terminal device on the unlicensed spectrum.

A type of the channel access procedure is not limited in this application. For example, the type of the channel access procedure may include a type 1 or a type 2.

Channel occupancy may include information related to a COT. In some embodiments, the COT may be a COT initiated and shared by a terminal device other than the first terminal device. For example, a communications device (for example, the second terminal device) may share a COT occupied by the communications device with the first terminal device, and the first terminal device may perform communication based on the shared COT. Alternatively, the first terminal device may initiate a COT and perform communication by using the COT.

Resource occupation may include occupation of a time resource and/or a frequency resource. For example, resource occupation may be related to a first resource for first sidelink data. Alternatively, resource occupation may be related to an occupant of a resource.

The first operation may be related to selection of a sidelink resource and/or the first sidelink data transmitted by the first terminal device. For example, the first operation includes one or more of the following operations: selection of a sidelink resource, selection of a destination address before the first terminal generates the first sidelink data, selection of a logical channel before the first sidelink data is generated, or selection of a HARQ process used for transmission of the first sidelink data.

The channel access, resource occupation, and channel occupation are all related to the unlicensed spectrum. Therefore, the first condition is related to the unlicensed spectrum. In this application, the first operation may be executed when the first condition is met. That is, based on the first condition, an impact of the unlicensed spectrum may be considered for execution of the first operation. Therefore, in this application, through setting of the first condition, at least one of a process of selecting a sidelink resource or a process of generating sidelink data is optimized on the unlicensed spectrum.

In some implementations, a condition for the first terminal device to execute the first operation on the unlicensed spectrum may further include a second condition. The second condition may include, for example, a condition not related to the unlicensed spectrum. In an implementation, if both the first condition and the second condition are met, the first terminal device may execute the first operation. In another implementation, if the first condition is not met, the first terminal device may execute the first operation in a case in which the second condition is met. For example, the first operation includes resource selection. If a first resource does not meet the first condition, resource selection may be performed based on the second condition. That is, if the first resource meets the second condition, the first terminal device may select the first resource to transmit the first sidelink data. In an implementation, if the first operation is not for the unlicensed spectrum or does not need to meet a COT sharing condition, the first condition may be ignored, and the first operation may be executed in a case in which the second condition is met.

In some embodiments, the first condition may be determined based on an indication of from physical layer of the first terminal device. That is, whether some or all of conditions in the first condition need to be met for execution of the first operation may be determined based on the indication of the physical layer. For example, the indication of the physical layer may be used to indicate to enable the first condition, that is, indicating that the first condition needs to be met before the first operation is performed. Alternatively, the indication of the physical layer may be used to indicate which condition or conditions in the first condition are enabled, that is, indicating which condition or conditions in the first condition need to be met before the first operation is performed.

In some implementations, a medium access control layer (medium access control, MAC) of the first terminal device may provide first information of the first sidelink data to the physical layer of the first terminal device. The first information may include information related to the first sidelink data. For example, the first information may include one or more of the following information: a source identifier, a destination identifier, or a value of a CAPC. Based on the first information, the physical layer may implement transmission of the first sidelink data.

The following describes settings of the first condition in detail based on different cases of the first operation.

In some embodiments, the first operation may include selection of a sidelink resource. A process of selecting a sidelink resource may include: reporting, by the physical layer of the first terminal device, a resource set to the MAC layer, where the MAC layer performs random resource selection on a premise that the first condition is met. For example, in a case in which the first resource meets the first condition, the first terminal device may select the first resource for sidelink transmission.

In some embodiments, a sidelink resource for the first sidelink data may be the first resource. The first sidelink data may be sidelink data to be selected by the first terminal device. The first resource may be a to-be-selected sidelink resource. That is, whether the first resource is selected for sidelink transmission may be determined based on the first condition. The first condition may be related to resource occupation of a second resource corresponding to the first resource. A time domain position of the second resource may be earlier than a time domain position of the first resource. Sidelink data corresponding to the second resource may be second sidelink data.

It should be noted that the second resource is a resource used for sidelink transmission. In addition, a communications device that occupies the second resource is not limited in this application. For example, the second resource may be occupied by the first terminal device. Alternatively, the second resource may be occupied by a terminal device other than the first terminal device.

For example, if the first resource is a resource in a time unit N, the second resource may be a resource in a time unit N-1 and/or a resource before the time unit N-1. N may be an integer greater than or equal to 0. The time unit may include one or more of a slot, a second, a microsecond, a symbol, or the like.

In a case in which the first condition is related to resource occupation of the second resource, the first condition may be determined based on one or more of the following information: a CAPC of the second sidelink data; a COT containing the second resource; an occupant of the second resource; a source identifier of the second sidelink data; a destination identifier of the second sidelink data; or a time gap between the first resource and the second resource. The following separately describes the foregoing information by using examples.

In a case in which the first condition is determined based on the CAPC of the second sidelink data, the first condition may include: a value of the CAPC of the second sidelink data is greater than or equal to a value of a CAPC of the first sidelink data. A value of a CAPC may be related to duration of a COT, and a larger value of the CAPC may indicate longer duration of the COT. Therefore, a larger value of the CAPC of the second sidelink data may indicate longer duration of the COT containing the second sidelink resource. In a case in which the duration of the COT of the second sidelink resource may cover the first sidelink resource, the first terminal device may perform communication on the first sidelink resource by using the COT. That is, in a case in which the first sidelink resource meets a condition that the value of the CAPC of the second sidelink data is greater than or equal to the value of the CAPC of the first sidelink data, the first terminal device may select the first sidelink resource as a resource for performing sidelink communication.

In a case in which the first condition is determined based on the COT containing the second resource, the first condition may include: the COT containing the second resource includes the first resource. In a case in which the COT containing the second resource includes the first resource, the first terminal device may perform communication on the first sidelink resource by using the COT. That the COT is a shared COT is used as an example. In a case in which the COT includes the first resource, the COT may be shared with the first terminal device to perform sidelink communication on the first resource. That is, in a case in which the COT containing the second resource includes the first resource, the first terminal device may select the first resource as a resource for performing sidelink communication.

It should be noted that the COT containing the second resource may be a COT initiated by the first terminal device, or may be a shared COT initiated by another communications device. For example, the second resource may be a resource contained in a shared COT initiated by the second terminal device. Alternatively, the second resource may be a resource contained in the COT initiated by the first terminal device.

In a case in which the first condition is determined based on the occupant of the second resource, the first condition may include: the occupant of the second resource is a specific communications device. That is, in a case in which the occupant of the second resource is a specific communications device, the first terminal device may select the first resource to perform sidelink communication. It may be understood that in a case in which an initiator of the COT that contains the second resource is a specific communications device, the first terminal device may perform communication by using the first resource in the COT.

In some embodiments, the specific communications device may be the first terminal device, and the first condition may include: the occupant of the second resource is the first terminal device. In a case in which the occupant of the second resource is the first terminal device, the COT containing the second resource may be used by the first terminal device. That is, the COT initiated by the first terminal device may be used by the first terminal device to perform sidelink communication in a resource subsequent to the second resource.

In a case in which the first condition is determined based on the source identifier of the second sidelink data, the first condition may include: the source identifier of the second sidelink data may match a destination identifier of the first sidelink data. That is, if the second resource is used by the second terminal device to perform sidelink communication, but the first resource is used to transmit sidelink data to the second terminal device, the COT containing the second resource may be used to transmit the first sidelink data to the second terminal device. Alternatively, in a case in which the first condition is determined based on the source identifier of the second sidelink data, the first condition may include: the source identifier of the second sidelink data may match a source identifier of the first sidelink data.

In a case in which the first condition is determined based on the destination identifier of the second sidelink data, the first condition may include: the destination identifier of the second sidelink data may match the source identifier of the first sidelink data. That is, if the second resource is occupied by the second terminal device, but the second resource is used to transmit data to the first terminal device, the COT containing the second resource may be used by the first terminal device to transmit the first sidelink data.

In a case in which the first condition is determined based on the time gap between the first resource and the second resource, the first condition may include: the time gap between the second resource and the first resource is sufficient for the first terminal device to perform a type 1 or type 2 channel access procedure. It may be understood that if the second resource does not belong to a COT, the first terminal device may actively initiate a COT (for example, perform LBT) and perform sidelink communication. In a case in which the time gap between the first resource and the second resource is sufficient for a channel access procedure, the first terminal device may successfully perform the channel access procedure, to implement channel occupation, thereby transmitting the first sidelink data. Therefore, in a case in which the time gap between the second resource and the first resource is sufficient for the first terminal device to perform a channel access procedure (for example, a type 1 channel access procedure), the first terminal device may select the first resource to transmit the first sidelink data.

It should be noted that the time gap between the first resource and the second resource may be an interval between an end time of the first resource and a start time of the second resource. Alternatively, the time gap between the first resource and the second resource may be an interval between a start time unit of the first resource and an end time unit of the second resource. That a time unit is an OFDM symbol is used as an example. In this case, the time gap may be a quantity of symbols between a first OFDM symbol of the first resource and a last OFDM symbol of the second resource.

As noted above, the condition for the first terminal device to execute the first operation on the unlicensed spectrum may further include the second condition. In a case in which the first operation includes resource selection, the second condition may be determined, for example, based on one or more of the following conditions: the first resource is within an SL DRX active time (occur within the SL DRX Active time as specified in clause 5.28.2 of the destination UE selected for indicating to the physical layer the SL DRX Active time above); being consistent with a quantity of selected frequency resources (according to the amount of selected frequency resources); the first resource meets a remaining packet delay budget (the remaining PDB of SL data available in the logical channel(s) allowed on the carrier); ensuring a minimum time gap between any two selected resources in a case in which a PSFCH is configured for a resource pool (ensuring the minimum time gap between any two selected resources in case that PSFCH is configured for this pool of resources); or a retransmission resource may be indicated by time resource assignment of a prior SCI (a retransmission resource can be indicated by the time resource assignment of a prior SCI according to clause 8.3.1.1 of TS 38.212 [9]).

In some embodiments, the first operation may include one or more of selection of a destination address before the first terminal device generates the first sidelink data, selection of a logical channel before the first terminal device generates the first sidelink data, or selection of a HARQ process used for transmission of the first sidelink data. In this case, the first condition may be related to the COT sharing condition. That is, if it is determined at a resource selection stage that the first resource is selected for sidelink communication, and the first resource is related to a COT shared with another communications device (for example, the first resource belongs to the shared COT), the first condition may be related to a condition for sharing the COT. That is, within the COT, the first sidelink data transmitted by the first terminal device needs to meet the COT sharing condition.

In some implementations, the COT sharing condition may be related to the second sidelink data corresponding to the second resource. For example, the COT sharing condition may be determined based on one or more of the following information in the second sidelink data: a destination identifier, a source identifier, a value of a CAPC, or the like.

In an implementation, the COT sharing condition may include one or more of the following conditions: the source identifier of the first sidelink data is the destination identifier of the second sidelink data; the destination identifier of the first sidelink data is the source identifier of the second sidelink data; or the value of the CAPC of the first sidelink data is less than or equal to the value of the CAPC of the second sidelink data.

The following separately describes possible settings of the first condition for different first operations.

In some embodiments, when the first operation includes the selection of the destination address before the first sidelink data is generated, the first terminal device may select sidelink data that meets the COT sharing condition. For example, in a case in which the first sidelink data meets the COT sharing condition, the first terminal device may select the first sidelink data for transmission. The COT sharing condition may include, for example, one or more of the following conditions: the source identifier of the first sidelink data is the destination identifier of the second sidelink data, or the destination identifier of the first sidelink data is the source identifier of the second sidelink data. That is, in selection of the destination address, if the source identifier of the first sidelink data is the destination identifier of the second sidelink data and/or the destination identifier of the first sidelink data is the source identifier of the second sidelink data, the first terminal device may select the first sidelink data for transmission.

In the selection of the destination address before the first sidelink data is generated, in a case in which the first condition is determined based on the source identifier of the second sidelink data, the first condition may include: the source identifier of the second sidelink data may match the destination identifier of the first sidelink data. That is, if the second resource is used by the second terminal device to transmit the second sidelink data, but the first resource is used to transmit data to the second terminal device, the COT containing the second resource may be used to transmit the first sidelink data to the second terminal device.

In the selection of the destination address before the first sidelink data is generated, in a case in which the first condition is determined based on the destination identifier of the second sidelink data, the first condition may include: the destination identifier of the second sidelink data may match the source identifier of the first sidelink data. That is, if the second resource is used by the second terminal device to transmit the second sidelink data, but the second resource is used to transmit data to the first terminal device, the COT containing the second resource may be used by the first terminal device to transmit the first sidelink data.

The following uses an example in which the first resource is a resource in a time unit N and the second resource is a resource in a time unit N-1 for description. The second resource is used to transmit the second sidelink data from the source identifier A to the destination identifier B. When the first resource is a resource that needs to meet the COT sharing condition, in selection of the destination address, the first sidelink data transmitted on the first resource needs to meet at least one of the following conditions: the destination identifier is A, or the source identifier is B.

It should be noted that, in a case in which a second operation includes destination address selection, the second condition may be determined, for example, based on one or more of the following conditions: sidelink data is available for transmission (SL data is available for transmission); a parameter SBj > 0, in case there is any logical channel having SBj > 0 (SBj > 0, in case there is any logical channel having SBj > 0); if a parameter sl-configuredGrantType1Allowed is configured and in a case in which a sidelink grant is a configured grant type 1, the parameter sl-configuredGrantType1Allowed is set to true (sl-configuredGrantType 1 Allowed, if configured, is set to true in case the SL grant is a Configured Grant Type 1); if a parameter sl-AllowedCG-List is configured, and sl-AllowedCG-List includes a configured grant index associated with the first resource (sl-AllowedCG-List, if configured, includes the configured grant index associated to the SL grant); or if a PSFCH is not configured, sl-HARQ-FeedbackEnabled is set to disabled (sl-HARQ-FeedbackEnabled is set to disabled, if PSFCH is not configured for the SL grant associated to the SCI).

In some embodiments, the first operation includes the selection of the logical channel before the first sidelink data is generated. In this case, the first terminal device may select data that meets the COT sharing condition for transmission. For example, in a case in which the first sidelink data meets the COT sharing condition, the first terminal device may select the first sidelink data for transmission. For example, the COT sharing condition may include: the value of the CAPC of the first sidelink data is less than or equal to the value of the CAPC of the second sidelink data.

The following again uses the example in which the first resource is a resource in a time unit N and the second resource is a resource in a time unit N-1 for description. The value of the CAPC of the second sidelink data corresponding to the second resource is X. When the first resource is a resource that needs to meet the COT sharing condition, and in selection of the logical channel, the value of the CAPC of the first sidelink data transmitted on the first resource needs to be equal to or less than X.

In a case in which the first operation includes the selection of the logical channel before the first sidelink data is generated, the second condition may include one or more of the following conditions: sidelink data is available for transmission (SL data is available for transmission); if a parameter sl-configuredGrantType1Allowed is configured and in a case in which a sidelink grant is a configured grant type 1, the parameter sl-configuredGrantType1Allowed is set to true (sl-configuredGrantType1Allowed, if configured, is set to true in case the SL grant is a Configured Grant Type 1); or if a parameter sl-AllowedCG-List is configured, and sl-AllowedCG-List includes a grant index of a configuration associated with the first resource (sl-AllowedCG-List, if configured, includes the configured grant index associated to the SL grant). Additionally or Alternatively, the second condition may include: if a PSFCH is configured for a sidelink grant associated with SCI: if sl-HARQ-FeedbackEnabled is set to enabled for a logical channel with a highest priority, sl-HARQ-FeedbackEnabled is set to enabled; or if sl-HARQ-FeedbackEnabled is set to disabled for the logical channel with the highest priority, sl-HARQ-FeedbackEnabled is set to disabled; Else, sl-HARQ-FeedbackEnabled is set to disabled (if PSFCH is configured for the sidelink grant associated to the SCI: sl-HARQ-FeedbackEnabled is set to enabled, if sl-HARQ-FeedbackEnabled is set to enabled for the highest priority logical channel satisfying the above conditions; or sl-HARQ-FeedbackEnabled is set to disabled, if sl-HARQ-FeedbackEnabled is set to disabled for the highest priority logical channel satisfying the above conditions. Else, sl-HARQ-FeedbackEnabled is set to disabled).

In some embodiments, the first operation may include the selection of the HARQ process. When selecting the HARQ process, the first terminal device may select a HARQ process that meets the COT sharing condition. For example, in a case in which a HARQ process corresponding to the first resource (that is, the HARQ process used for transmission of the first sidelink data) meets the COT sharing condition, the first terminal device may select the HARQ process. The COT sharing condition may include, for example, one or more of the following conditions: the source identifier of the first sidelink data is the destination identifier of the second sidelink data, the destination identifier of the first sidelink data is the source identifier of the second sidelink data, or the value of the CAPC of the first sidelink data is less than or equal to the value of the CAPC of the second sidelink data.

The following again uses the example in which the first resource is a resource in a time unit N and the second resource is a resource in a time unit N-1 for description. The second resource is used to transmit the second sidelink data from the source identifier A to the destination identifier B. The value of the CAPC of the second sidelink data corresponding to the second resource is X. When the first resource belongs to a shared COT, the first sidelink data transmitted on the first resource needs to meet at least one of the following conditions: the destination identifier is A, the source identifier is B, or the value of the CAPC of the first sidelink data transmitted on the first resource is equal to or less than X. In this case, the first terminal device may select the HARQ process corresponding to the first resource. When the first resource meets the COT sharing condition, the first terminal device may select the HARQ process corresponding to the first resource.

It should be noted that the source identifier and the destination identifier described above may be respectively a source layer 2ID and a destination layer 2ID. For example, the source identifier of the first sidelink data may be a source layer 2ID of the first sidelink data, and the destination identifier of the first sidelink data may be a destination layer 2ID of the first sidelink data.

With reference to FIG. 1 to FIG. 4, the foregoing describes the method embodiments of this application in detail. With reference to FIG. 5 to FIG. 7, the following describes the apparatus embodiments of this application in detail. It should be understood that the descriptions of the method embodiments correspond to descriptions of the apparatus embodiments, and therefore, for parts that are not described in detail, refer to the foregoing method embodiments.

FIG. 5 is a schematic structural diagram of a terminal device 500 according to an embodiment of this application. The terminal device 500 may include an executing unit 510 and a transmitting unit 520.

The executing unit 510 is configured to: if a first condition is met, execute a first operation on an unlicensed spectrum; and the transmitting unit 520 is configured to transmit first sidelink data based on the first operation, where the first condition is related to one or more of channel access, resource occupation, or channel occupation, and the first operation is related to selection of a sidelink resource and/or generation of the first sidelink data.

Optionally, the first operation includes one or more of the following operations: the selection of the sidelink resource, selection of a destination address before the first terminal device generates the first sidelink data, selection of a logical channel before the first terminal device generates the first sidelink data, or selection of a hybrid automatic repeat request HARQ process used for transmission of the first sidelink data.

Optionally, a sidelink resource for the first sidelink data is a first resource, and if the first operation includes the selection of the first resource, the first condition is related to resource occupation of a second resource corresponding to the first resource, and the second resource is a sidelink resource whose time domain position is earlier than the first resource.

Optionally, sidelink data corresponding to the second resource is second sidelink data, and the first condition is determined based on one or more of the following information: a channel access priority class CAPC of the second sidelink data; a channel occupancy time COT containing the second resource; an occupant of the second resource; a source identifier of the second sidelink data; a destination identifier of the second sidelink data; or a time gap between the first resource and the second resource.

Optionally, the first condition includes one or more of the following conditions: a value of the CAPC of the second sidelink data is greater than or equal to a value of a CAPC of the first sidelink data; the COT containing the second resource includes the first resource; the occupant of the second resource is the first terminal device; the destination identifier of the second sidelink data matches a source ID of the first sidelink data; the source identifier of the second sidelink data matches a destination identifier of the first sidelink data; or the time gap between the second resource and the first resource is sufficient for the first terminal device to perform a type 1 channel access procedure.

Optionally, if the first operation includes one or more of the selection of the destination address before the first terminal device generates the first sidelink data, the selection of the logical channel before the first terminal device generates the first sidelink data, or the selection of the HARQ process used for transmission of the first sidelink data, the first condition is related to a COT sharing condition.

Optionally, the COT sharing condition is determined based on one or more of the following information of the first sidelink data: a source identifier, a destination identifier, or a value of a CAPC.

Optionally, a sidelink resource for the first sidelink data is a first resource, the COT sharing condition is related to a second resource corresponding to the first resource, the second resource is a sidelink resource whose time domain position is earlier than the first resource, sidelink data corresponding to the second resource is second sidelink data, and the COT sharing condition includes one or more of the following conditions: the source identifier of the first sidelink data is a destination identifier of the second sidelink data; the destination identifier of the first sidelink data is a source identifier of the second sidelink data; or the value of the CAPC of the first sidelink data is less than or equal to a value of a CAPC of the second sidelink data.

Optionally, the first condition is determined based on an indication from a physical layer of the first terminal device.

Optionally, the terminal device 500 further includes: a providing unit, configured to provide, via a medium access control layer of the terminal device, first information of the first sidelink data to a physical layer of the terminal device, where the first information includes one or more of the following information: a source identifier, a destination identifier, or a value of a CAPC.

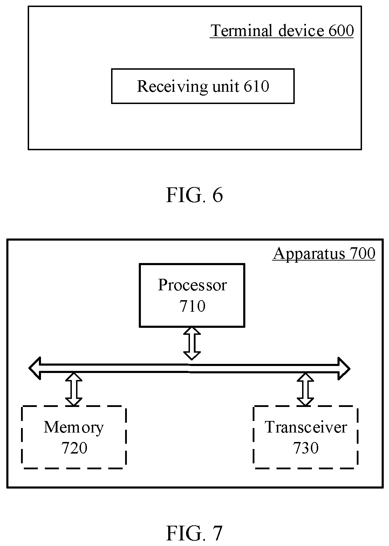

FIG. 6 is a schematic structural diagram of a terminal device 600 according to this application. The terminal device 600 may be a second terminal device. The terminal device 600 may include a receiving unit 610.

The receiving unit 610 is configured to receive first sidelink data transmitted by a first terminal device, where the first sidelink data is transmitted based on a first operation executed by the first terminal device, the first operation is executed by the first terminal device on an unlicensed spectrum in a case in which a first condition is met, the first condition is related to one or more of channel access, resource occupation, or channel occupation, and the first operation is related to selection of a sidelink resource and/or generation of the first sidelink data.

Optionally, the first operation includes one or more of the following operations: the selection of the sidelink resource, selection of a destination address before the first terminal device generates the first sidelink data, selection of a logical channel before the first terminal device generates the first sidelink data, or selection of a hybrid automatic repeat request HARQ process used for transmission of the first sidelink data.

Optionally, a sidelink resource for the first sidelink data is a first resource, and if the first operation includes the selection of the first resource, the first condition is related to resource occupation of a second resource corresponding to the first resource, and the second resource is a sidelink resource whose time domain position is earlier than the first resource.

Optionally, sidelink data corresponding to the second resource is second sidelink data, and the first condition is determined based on one or more of the following information: a channel access priority class CAPC of the second sidelink data; a channel occupancy time COT containing the second resource; an occupant of the second resource; a source identifier of the second sidelink data; a destination identifier of the second sidelink data; or a time gap between the first resource and the second resource.

Optionally, the first condition includes one or more of the following conditions: a value of the CAPC of the second sidelink data is greater than or equal to a value of a CAPC of the first sidelink data; the COT containing the second resource includes the first resource; the occupant of the second resource is the first terminal device; the destination identifier of the second sidelink data matches a source ID of the first sidelink data; the source identifier of the second sidelink data matches a destination identifier of the first sidelink data; or the time gap between the second resource and the first resource is sufficient for the first terminal device to perform a type 1 channel access procedure.

Optionally, if the first operation includes one or more of the selection of the destination address before the first terminal device generates the first sidelink data, the selection of the logical channel before the first terminal device generates the first sidelink data, or the selection of the HARQ process used for transmission of the first sidelink data, the first condition is related to a COT sharing condition.

Optionally, the COT sharing condition is determined based on one or more of the following information of the first sidelink data: a source identifier, a destination identifier, or a value of a CAPC.

Optionally, a sidelink resource for the first sidelink data is a first resource, the COT sharing condition is related to a second resource corresponding to the first resource, the second resource is a sidelink resource whose time domain position is earlier than the first resource, sidelink data corresponding to the second resource is second sidelink data, and the COT sharing condition includes one or more of the following conditions: the source identifier of the first sidelink data is a destination identifier of the second sidelink data; the destination identifier of the first sidelink data is a source identifier of the second sidelink data; or the value of the CAPC of the first sidelink data is less than or equal to a value of a CAPC of the second sidelink data.

Optionally, the first condition is determined based on an indication from a physical layer of the first terminal device.

FIG. 7 is a schematic structural diagram of a communications apparatus according to an embodiment of this application. A dashed line in FIG. 7 indicates that the unit or module is optional. The apparatus 700 may be configured to implement a method described in the foregoing method embodiments. The apparatus 700 may be a chip, a terminal device, or a network device.

The apparatus 700 may include one or more processors 710. The processor 710 may support the apparatus 700 to implement a method described in the foregoing method embodiments. The processor 710 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 700 may further include one or more memories 720. The memory 720 stores a program, and the program may be executed by the processor 710, so that the processor 710 executes a method described in the foregoing method embodiments. The memory 720 may be separate from the processor 710 or may be integrated into the processor 710.

The apparatus 700 may further include a transceiver 730. The processor 710 may communicate with another device or chip by using the transceiver 730. For example, the processor 710 may transmit data to and receive data from another device or chip by using the transceiver 730.

An embodiment of this application further provides a computer-readable storage medium, configured to store a program. The computer-readable storage medium may be applied to a terminal or a network device provided in embodiments of this application, and the program causes a computer to execute a method executed by the terminal or the network device in embodiments of this application.

An embodiment of this application further provides a computer program product. The computer program product includes a program. The computer program product may be applied to a terminal or a network device provided in embodiments of this application, and the program causes a computer to execute a method executed by the terminal or the network device in embodiments of this application.

An embodiment of this application further provides a computer program. The computer program may be applied to a terminal or a network device provided in embodiments of this application, and the computer program causes a computer to execute a method executed by the terminal or the network device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "pre-defined" or "pre-configured" may be implemented by pre-storing corresponding code or a corresponding table in a device (for example, including a terminal device and a network device) or in other manners that can be used for indicating related information, and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

## Claims

1. A method for sidelink communication, comprising:
if a first condition is met, executing, by a first terminal device, a first operation on an unlicensed spectrum; and
transmitting, by the first terminal device based on the first operation, first sidelink data,
wherein the first condition is related to one or more of channel access, resource occupation, or channel occupation, and the first operation is related to selection of a sidelink resource and/or generation of the first sidelink data.

2. The method according to claim 1, wherein the first operation comprises one or more of following operations:
the selection of the sidelink resource;
selection of a destination address before the first terminal device generates the first sidelink data;
selection of a logical channel before the first terminal device generates the first sidelink data; or
selection of a hybrid automatic repeat request HARQ process used for transmission of the first sidelink data.

3. The method according to claim 2, wherein a sidelink resource for the first sidelink data is a first resource, and if the first operation comprises selection of the first resource, the first condition is related to resource occupation of a second resource corresponding to the first resource, wherein the second resource is a sidelink resource whose time domain position is earlier than the first resource.

4. The method according to claim 3, wherein sidelink data corresponding to the second resource is second sidelink data, and the first condition is determined based on one or more of following information:
a channel access priority class CAPC of the second sidelink data;
a channel occupancy time COT containing the second resource;
an occupant of the second resource;
a source identifier of the second sidelink data;
a destination identifier of the second sidelink data; or
a time gap between the first resource and the second resource.

5. The method according to claim 4, wherein the first condition comprises one or more of following conditions:
a value of the CAPC of the second sidelink data is greater than or equal to a value of a CAPC of the first sidelink data;
the COT containing the second resource comprises the first resource;
the occupant of the second resource is the first terminal device;
the destination identifier of the second sidelink data matches a source ID of the first sidelink data;
the source identifier of the second sidelink data matches a destination identifier of the first sidelink data; or
the time gap between the second resource and the first resource is sufficient for the first terminal device to perform a type 1 channel access procedure.

6. The method according to any one of claims 2 to 5, wherein if the first operation comprises one or more of the selection of the destination address before the first terminal device generates the first sidelink data, the selection of the logical channel before the first terminal device generates the first sidelink data, or the selection of the HARQ process used for transmission of the first sidelink data, the first condition is related to a COT sharing condition.

7. The method according to claim 6, wherein the COT sharing condition is determined based on one or more of following information of the first sidelink data: a source identifier, a destination identifier, or a value of a CAPC.

8. The method according to claim 7, wherein a sidelink resource for the first sidelink data is a first resource, the COT sharing condition is related to a second resource corresponding to the first resource, the second resource is a sidelink resource whose time domain position is earlier than the first resource, sidelink data corresponding to the second resource is second sidelink data, and the COT sharing condition comprises one or more of following conditions:
the source identifier of the first sidelink data is a destination identifier of the second sidelink data;
the destination identifier of the first sidelink data is a source identifier of the second sidelink data; or
the value of the CAPC of the first sidelink data is less than or equal to a value of a CAPC of the second sidelink data.

9. The method according to any one of claims 1 to 8, wherein the first condition is determined based on an indication from a physical layer of the first terminal device.

10. The method according to any one of claims 1 to 9, wherein the method further comprises:
providing, by a medium access control layer of the first terminal device, first information of the first sidelink data to a physical layer of the first terminal device,
wherein the first information comprises one or more of following information: a source identifier, a destination identifier, or a value of a CAPC.

11. A method for sidelink communication, comprising:
receiving, by a second terminal device, first sidelink data transmitted by a first terminal device,
wherein the first sidelink data is transmitted based on a first operation executed by the first terminal device, the first operation is executed by the first terminal device on an unlicensed spectrum in a case in which a first condition is met, the first condition is related to one or more of channel access, resource occupation, or channel occupation, and the first operation is related to selection of a sidelink resource and/or generation of the first sidelink data.

12. The method according to claim 11, wherein the first operation comprises one or more of following operations:
the selection of the sidelink resource;
selection of a destination address before the first terminal device generates the first sidelink data;
selection of a logical channel before the first terminal device generates the first sidelink data; or
selection of a hybrid automatic repeat request HARQ process used for transmission of the first sidelink data.

13. The method according to claim 12, wherein a sidelink resource for the first sidelink data is a first resource, and if the first operation comprises selection of the first resource, the first condition is related to resource occupation of a second resource corresponding to the first resource, wherein the second resource is a sidelink resource whose time domain position is earlier than the first resource.

14. The method according to claim 13, wherein sidelink data corresponding to the second resource is second sidelink data, and the first condition is determined based on one or more of following information:
a channel access priority class CAPC of the second sidelink data;
a channel occupancy time COT containing the second resource;
an occupant of the second resource;
a source identifier of the second sidelink data;
a destination identifier of the second sidelink data; or
a time gap between the first resource and the second resource.

15. The method according to claim 14, wherein the first condition comprises one or more of following conditions:
a value of the CAPC of the second sidelink data is greater than or equal to a value of a CAPC of the first sidelink data;
the COT containing the second resource comprises the first resource;
the occupant of the second resource is the first terminal device;
the destination identifier of the second sidelink data matches a source ID of the first sidelink data;
the source identifier of the second sidelink data matches a destination identifier of the first sidelink data; or
the time gap between the second resource and the first resource is sufficient for the first terminal device to perform a type 1 channel access procedure.

16. The method according to any one of claims 12 to 15, wherein if the first operation comprises one or more of the selection of the destination address before the first terminal device generates the first sidelink data, the selection of the logical channel before the first terminal device generates the first sidelink data, or the selection of the HARQ process used for transmission of the first sidelink data, the first condition is related to a COT sharing condition.

17. The method according to claim 16, wherein the COT sharing condition is determined based on one or more of following information of the first sidelink data: a source identifier, a destination identifier, or a value of a CAPC.

18. The method according to claim 17, wherein a sidelink resource for the first sidelink data is a first resource, the COT sharing condition is related to a second resource corresponding to the first resource, the second resource is a sidelink resource whose time domain position is earlier than the first resource, sidelink data corresponding to the second resource is second sidelink data, and the COT sharing condition comprises one or more of following conditions:
the source identifier of the first sidelink data is a destination identifier of the second sidelink data;
the destination identifier of the first sidelink data is a source identifier of the second sidelink data; or
the value of the CAPC of the first sidelink data is less than or equal to a value of a CAPC of the second sidelink data.

19. The method according to any one of claims 11 to 18, wherein the first condition is determined based on an indication from a physical layer of the first terminal device.

20. A terminal device, comprising:
an executing unit, configured to: if a first condition is met, execute a first operation on an unlicensed spectrum; and
a transmitting unit, configured to transmit first sidelink data based on the first operation,
wherein the first condition is related to one or more of channel access, resource occupation, or channel occupation, and the first operation is related to selection of a sidelink resource and/or generation of the first sidelink data.

21. The terminal device according to claim 20, wherein the first operation comprises one or more of following operations:
the selection of the sidelink resource;
selection of a destination address before the first terminal device generates the first sidelink data;
selection of a logical channel before the first terminal device generates the first sidelink data; or
selection of a hybrid automatic repeat request HARQ process used for transmission of the first sidelink data.

22. The terminal device according to claim 21, wherein a sidelink resource for the first sidelink data is a first resource, and if the first operation comprises the selection of the first resource, the first condition is related to resource occupation of a second resource corresponding to the first resource, and the second resource is a sidelink resource whose time domain position is earlier than the first resource.

23. The terminal device according to claim 22, wherein sidelink data corresponding to the second resource is second sidelink data, and the first condition is determined based on one or more of following information:
a channel access priority class CAPC of the second sidelink data;
a channel occupancy time COT containing the second resource;
an occupant of the second resource;
a source identifier of the second sidelink data;
a destination identifier of the second sidelink data; or
a time gap between the first resource and the second resource.

24. The terminal device according to claim 23, wherein the first condition comprises one or more of following conditions:
a value of the CAPC of the second sidelink data is greater than or equal to a value of a CAPC of the first sidelink data;
the COT containing the second resource comprises the first resource;
the occupant of the second resource is the first terminal device;
the destination identifier of the second sidelink data matches a source ID of the first sidelink data;
the source identifier of the second sidelink data matches a destination identifier of the first sidelink data; or
the time gap between the second resource and the first resource is sufficient for the first terminal device to perform a type 1 channel access procedure.

25. The terminal device according to any one of claims 21 to 24, wherein if the first operation comprises one or more of the selection of the destination address before the first terminal device generates the first sidelink data, the selection of the logical channel before the first terminal device generates the first sidelink data, or the selection of the HARQ process used for transmission of the first sidelink data, the first condition is related to a COT sharing condition.

26. The terminal device according to claim 25, wherein the COT sharing condition is determined based on one or more of following information of the first sidelink data: a source identifier, a destination identifier, or a value of a CAPC.

27. The terminal device according to claim 26, wherein a sidelink resource for the first sidelink data is a first resource, the COT sharing condition is related to a second resource corresponding to the first resource, the second resource is a sidelink resource whose time domain position is earlier than the first resource, sidelink data corresponding to the second resource is second sidelink data, and the COT sharing condition comprises one or more of following conditions:
the source identifier of the first sidelink data is a destination identifier of the second sidelink data;
the destination identifier of the first sidelink data is a source identifier of the second sidelink data; or
the value of the CAPC of the first sidelink data is less than or equal to a value of a CAPC of the second sidelink data.

28. The terminal device according to any one of claims 20 to 27, wherein the first condition is determined based on an indication from a physical layer of the first terminal device.

29. The terminal device according to any one of claims 20 to 28, wherein the terminal device further comprises:
a providing unit, configured to provide, via a medium access control layer of the terminal device, first information of the first sidelink data to a physical layer of the terminal device,
wherein the first information comprises one or more of following information: a source identifier, a destination identifier, or a value of a CAPC.

30. A terminal device, wherein the terminal device is a second terminal device, and the terminal device comprises:
a receiving unit, configured to receive first sidelink data transmitted by a first terminal device,
wherein the first sidelink data is transmitted based on a first operation executed by the first terminal device, the first operation is executed by the first terminal device on an unlicensed spectrum in a case in which a first condition is met, the first condition is related to one or more of channel access, resource occupation, or channel occupation, and the first operation is related to selection of a sidelink resource and/or generation of the first sidelink data.

31. The terminal device according to claim 30, wherein the first operation comprises one or more of following operations:
the selection of the sidelink resource;
selection of a destination address before the first terminal device generates the first sidelink data;
selection of a logical channel before the first terminal device generates the first sidelink data; or
selection of a hybrid automatic repeat request HARQ process used for transmission of the first sidelink data.

32. The terminal device according to claim 31, wherein a sidelink resource for the first sidelink data is a first resource, and if the first operation comprises the selection of the first resource, the first condition is related to resource occupation of a second resource corresponding to the first resource, and the second resource is a sidelink resource whose time domain position is earlier than the first resource.

33. The terminal device according to claim 32, wherein sidelink data corresponding to the second resource is second sidelink data, and the first condition is determined based on one or more of following information:
a channel access priority class CAPC of the second sidelink data;
a channel occupancy time COT containing the second resource;
an occupant of the second resource;
a source identifier of the second sidelink data;
a destination identifier of the second sidelink data; or
a time gap between the first resource and the second resource.

34. The terminal device according to claim 33, wherein the first condition comprises one or more of following conditions:
a value of the CAPC of the second sidelink data is greater than or equal to a value of a CAPC of the first sidelink data;
the COT containing the second resource comprises the first resource;
the occupant of the second resource is the first terminal device;
the destination identifier of the second sidelink data matches a source ID of the first sidelink data;
the source identifier of the second sidelink data matches a destination identifier of the first sidelink data; or
the time gap between the second resource and the first resource is sufficient for the first terminal device to perform a type 1 channel access procedure.

35. The terminal device according to any one of claims 31 to 34, wherein if the first operation comprises one or more of the selection of the destination address before the first terminal device generates the first sidelink data, the selection of the logical channel before the first terminal device generates the first sidelink data, or the selection of the HARQ process used for transmission of the first sidelink data, the first condition is related to a COT sharing condition.

36. The terminal device according to claim 35, wherein the COT sharing condition is determined based on one or more of following information of the first sidelink data: a source identifier, a destination identifier, or a value of a CAPC.

37. The terminal device according to claim 36, wherein a sidelink resource for the first sidelink data is a first resource, the COT sharing condition is related to a second resource corresponding to the first resource, the second resource is a sidelink resource whose time domain position is earlier than the first resource, sidelink data corresponding to the second resource is second sidelink data, and the COT sharing condition comprises one or more of following conditions:
the source identifier of the first sidelink data is a destination identifier of the second sidelink data;
the destination identifier of the first sidelink data is a source identifier of the second sidelink data; or
the value of the CAPC of the first sidelink data is less than or equal to a value of a CAPC of the second sidelink data.

38. The terminal device according to any one of claims 30 to 37, wherein the first condition is determined based on an indication from a physical layer of the first terminal device.

39. A terminal device, comprising a transceiver, a memory, and a processor, wherein the memory is configured to store a program, and the processor is configured to invoke the program in the memory, to cause the terminal to execute the method according to any one of claims 1 to 19.

40. An apparatus, comprising a processor, configured to invoke a program from a memory, to cause the apparatus to execute the method according to any one of claims 1 to 19.

41. A chip, comprising a processor, configured to invoke a program from a memory, to cause a device on which the chip is installed to execute the method according to any one of claims 1 to 19.

42. A computer-readable storage medium, wherein the computer-readable storage medium stores a program, and the program causes a computer to execute the method according to any one of claims 1 to 19.

43. A computer program product, comprising a program, wherein the program causes a computer to execute the method according to any one of claims 1 to 19.

44. A computer program, wherein the computer program causes a computer to execute the method according to any one of claims 1 to 19.
